# FASCICULE DE BREVET EUROPEEN

(11) **EP 2 647 425 B1**
(45) Date de publication et mention de la délivrance du brevet: **04.10.2017**
(21) Numéro de dépôt: 13305193.8
(22) Date de dépôt: 21.02.2013
(51) Int. Cl.: B01J 8/04, C10G 49/00

(54) **RÉACTEUR CATALYTIQUE AVEC DISPOSITIF DE TREMPE MUNI D'UNE INJECTION TANGENTIELLE D'UN FLUIDE DE TREMPE**
KATALYTISCHER REAKTOR MIT EINER HÄRTUNGSVORRICHTUNG, DIE MIT EINER TANGENTIALEN EINSPRITZUNG EINER HÄRTUNGSFLÜSSIGKEIT AUSGESTATTET IST
CATALYTIC REACTOR WITH QUENCHING DEVICE PROVIDED WITH TANGENTIAL INJECTION OF A QUENCHING FLUID

(30) Priorité: 04.04.2012 FR 1201009
(43) Date de publication de la demande: 09.10.2013
(73) Titulaire: IFP Énergies nouvelles, 92852 Rueil-Malmaison Cedex (FR)
(72) Inventeur: AUGIER, Frederic, 69360 SAINT SYMPHORIEN D OZON (FR); BOYER, Christophe, 69390 CHARLY (FR); SVEZIA, Daniel, 69320 FEYZIN (FR)

(56) Documents cités:
- US-A1- 2004 234 434
- US-A1- 2007 248 510
- US-A1- 2011 123 410
- US-B2- 7 314 602

## Description

La présente invention concerne le domaine des réacteurs catalytiques de type lits fixes, qui sont notamment mis en oeuvre dans les opérations d'hydrotraitement de charges d'hydrocarbures. L'invention décrit un système d'injection d'un fluide de trempe dans le réacteur.

Les réacteurs catalytiques sont mis en oeuvre notamment dans l'industrie pétrolière et pétrochimique pour traiter des effluents hydrocarbonés par réaction d'hydrotraitement. Ces réactions font réagir les composés carbonés avec de l'hydrogène dans des réactions d'hydrogénation, d'hydrodésulfuration, d'hydrogéazotation, d'hydrocraquage, d'hydrodéaromatisation.

Un réacteur catalytique est généralement composé d'une enceinte de forme cylindrique, comportant un ou plusieurs lits catalytiques, c'est à dire un lit de solides, par exemple sous la forme d'extrudé ou de sphère, qui ont pour rôle de catalyser la réaction d'hydrotraitement. Le réacteur est alimenté en tête par un fluide réactionnel, composé de l'effluent hydrocarboné et d'hydrogène.

La nature exothermique des réactions d'hydrotraitement réalisées en raffinage et en pétrochimie nécessite de diviser le volume de solide catalyseur en plusieurs lits et d'effectuer des injections de fluide froid pour refroidir le milieu réactionnel et pour approvisionner le réacteur en réactifs. Le fluide injecté peut être du liquide, en général une coupe d'hydrocarbures, ou un gaz, par exemple de l'hydrogène, selon les applications. Le fluide froid est introduit dans le réacteur au niveau d'un dispositif appelé boite de trempe, également couramment nommé boite de "quench". La technologie de boite de "quench" a pour principal objectif de mélanger les fluides chauds venant du lit supérieur au fluide froid injecté. Une fois les fluides mélangés, ils sont redistribués sur la section de réacteur par un dispositif de distribution, avant de pénétrer dans le lit catalytique situé sous le plateau distributeur.

Les documents US 5,837,208 et WO 2004/041426 fournissent des exemples de dispositifs de trempe basés sur la collecte des fluides chauds, l'injection du fluide froid par une canne d'injection droite dans l'espace de collecte situé immédiatement au dessus du plateau de collecte, le passage des fluides dans une boite de trempe, et la sortie des fluides directement au dessus d'un plateau distributeur.

Les documents US 2002/0039547, FR 2824495, US 6180068 et US 2004/0037759 décrivent des boites de trempe dans lesquelles un écoulement rotatif est généré afin de favoriser le mélange. L'écoulement rotatif est souvent conditionné par la façon dont les fluides collectés entrent dans le dispositif de trempe.

Les documents US 5403560 et US 2010/0303685 proposent de mettre en oeuvre un écoulement rotatif du fluide sur le plateau de collecte, en amont du passage dans la boite de trempe. L'écoulement rotatif est généré dans ces exemples par une géométrie particulière des plateaux collecteurs, par exemple au moyen d'éléments en forme de spirale positionnés pour forcer l'écoulement à tourner sur le plateau de collecte avant de rentrer dans la boite de trempe. Néanmoins, le positionnement d'inserts ou de chicanes en spirale s'avère volumineux et encombrant dans le réacteur.

Le document US 2004/0234434 présente un dispositif de trempe dans lequel un écoulement rotatif est généré sur le plateau de collecte. L'écoulement est généré par l'injection du fluide froid au moyen d'une canne d'injection circulaire en forme de tore comportant une pluralité de conduites de sortie. Les jets de fluide froid sont dirigés vers l'extérieur par rapport à l'axe du réacteur de manière à induire un écoulement rotatif. Cependant la canne d'injection est encombrante et mécaniquement difficile à installer et à maintenir dans un réacteur.

Le document US 2011/0123410 décrit un dispositif de trempe dans lequel un écoulement rotatif est généré en aval de la boite de trempe. La sortie de la boite de trempe est positionnée au-dessus d'une plaque perforée de manière à générer un écoulement rotatif.

L'objectif de la présente invention est d'améliorer le mélange du fluide de trempe avec les fluides chaud en positionnant la canne d'injection du fluide en périphérie du réacteur au niveau du plateau collecteur de manière à générer un écoulement rotatif sur le plateau. La présente invention propose d'utiliser une canne d'injection coudée, débouchant au-dessus du plateau collecteur à proximité de l'enceinte du réacteur et produisant un jet dont la direction est sensiblement tangentielle à l'enceinte du réacteur afin de produire de manière simple et efficace un mouvement rotatif du fluide sur le plateau de collecte.

La présente invention décrit un réacteur catalytique selon la revendication 1. La buse peut déboucher à la paroi de l'enceinte de manière à injecter un fluide selon une direction formant un angle compris entre -10° et +10° par rapport à la direction horizontale.

L'extrémité de la buse d'injection peut être composée d'une portion tubulaire droite formant un angle compris entre -10° et +10° par rapport à la direction tangente à la paroi de l'enceinte au niveau de l'orifice de la buse.

La portion tubulaire droite peut former un angle compris entre -10°et +10° par rapport à la direction horizontale.

La buse peut former un tube de longueur comprise entre 5 cm et 50 cm, mesurée dans l'espace de collecte.

La buse peut être disposée à une distance inférieure à 30 cm de l'enceinte et à une distance inférieure à 20 cm du plateau de collecte.

Le réacteur peut comporter un plateau distributeur de gaz et de liquide, disposé sous la boite de trempe.

Le réacteur peut comporter une plaque perforée disposée entre la boite de trempe et le plateau distributeur.

L'invention décrit également la mise en oeuvre d'un réacteur selon l'invention, dans laquelle on peut injecter par ladite buse un fluide comportant au moins 70% en volume de liquide. De plus, on peut injecter par ladite buse un fluide à une vitesse comprise entre 1 et 15 m/s.

L'invention décrit également un procédé selon la revendication 11 pour obtenir un réacteur selon l'une des revendications 1 à 8. Le dispositif selon l'invention permet d'atteindre d'excellentes performances de mélange comme illustré ci-après dans les exemples.

Par ailleurs, la canne d'injection selon l'invention est d'encombrement réduit par rapport aux solutions proches, notamment par rapport au dispositif décrit par le document US 2004/0234434. Ainsi, le montage mécanique de la canne d'injection sur le plateau est facile, de coût modéré. De plus la hauteur de l'espace de collecte au dessus du plateau de collecte peut en conséquence être réduite. Par conséquent, pour un même volume intérieur de réacteur, la mise en oeuvre de la présente invention permet un gain de volume de solide catalyseur.

En outre, la présente invention peut être mise en oeuvre dans des installations existantes. En particulier, la présente invention peut remplacer avantageusement un dispositif de trempe à canne d'injection droite, afin d'en améliorer les performances de trempe. De plus, en modifiant la position de la grille supportant le lit de solide catalyseur, il est possible de réduire l'espace de collecte et donc de gagner du volume qui peut être utilisé pour réaliser la réaction.

D'autres caractéristiques et avantages de l'invention seront mieux compris et apparaîtront clairement à la lecture de la description faite ci-après en se référant aux dessins parmi lesquels :
- les figures 1, 2, 2A et 2B schématisent un dispositif de tempe dans un réacteur selon l'invention,
- les figures 3 et 4 représentent deux dispositifs de trempe selon l'art antérieur,
- la figure 5 représente des courbes de performance d'un dispositif de trempe selon l'invention et de deux dispositifs de trempe selon l'art antérieur.

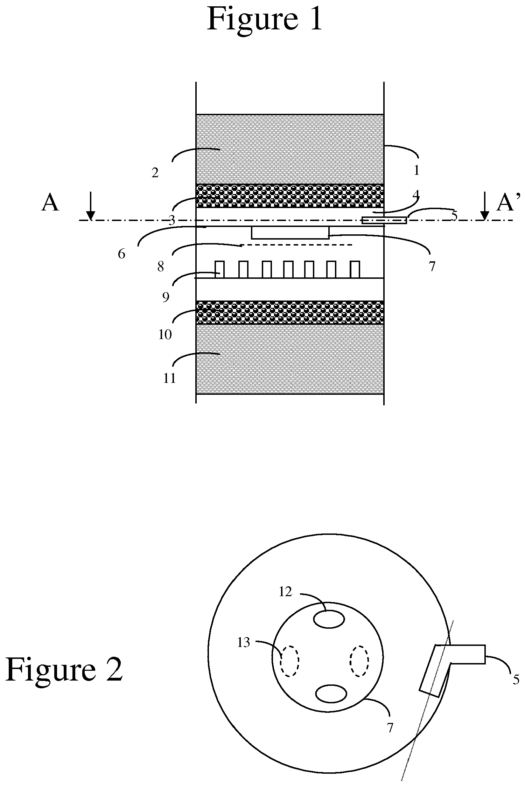

La figure 1 représente une portion de réacteur, dans lequel on effectue une réaction d'hydrotraitement. Le réacteur est composé d'une enceinte 1 renfermant au moins un lit de solide catalyseur 2. L'enceinte 1 peut avoir la forme d'un cylindre fermé à ses extrémités. En général, l'axe du cylindre est orienté selon la direction verticale. Par exemple le cylindre peut avoir un diamètre compris entre 1 et 10 mètres et une hauteur comprise entre 3 et 20 mètres. Le réacteur est alimenté en partie supérieure en fluide réactionnel, composé d'un gaz et d'un liquide, par exemple une charge d'hydrocarbures liquide et d'hydrogène gazeux. Le fluide réactionnel s'écoule selon une direction verticale descendante dans l'enceinte 1, notamment sous l'effet de la gravité. En d'autre terme, le gaz et le liquide s'écoulent à co-courant du haut vers le bas dans le réacteur. La réaction entre les réactifs est catalysée par un solide catalyseur, qui peut être sous forme d'extrudés ou de billes disposées entre deux grilles pour former un lit qui s'étend en général sur toute une section horizontale du volume intérieur de l'enceinte. Du fait de la réaction exothermique, le volume de solide catalyseur est divisé en plusieurs lits. Sur la figure 1, deux lits 2 et 11 de catalyseurs solides sont représentés.

Le lit 2 de solide catalyseur est posé sur une couche 3 de grains solides inertes, couramment nommé "grading". La couche 3 est supportée par une grille. Un espace vide 4 est situé entre la grille supportant la couche 3 et le plateau de collecte 6. Le gaz et le liquide s'écoulant à travers le lit 2 débouchent dans l'espace vide 4 appelé ci-après l'espace de collecte. Le plateau de collecte 6 permet de collecter le liquide et le gaz arrivant dans l'espace de collecte 4. Ainsi, le plateau de collecte constitue le premier organe mécanique rencontré par le liquide et le gaz circulant dans l'espace de collecte 4. Par exemple le plateau de collecte est un disque horizontal qui couvre la section interne de l'enceinte 1.

Selon l'invention, une canne d'injection 5, également nommée buse d'injection, permet d'introduire un fluide froid depuis l'extérieur du réacteur dans l'espace de collecte 4. La canne 5 est composée d'une portion de tuyau qui débouche dans l'espace de collecte 4. De préférence, le tuyau comporte un seul orifice de sortie dans l'espace 4, cet orifice étant situé au niveau de l'extrémité du tuyau.

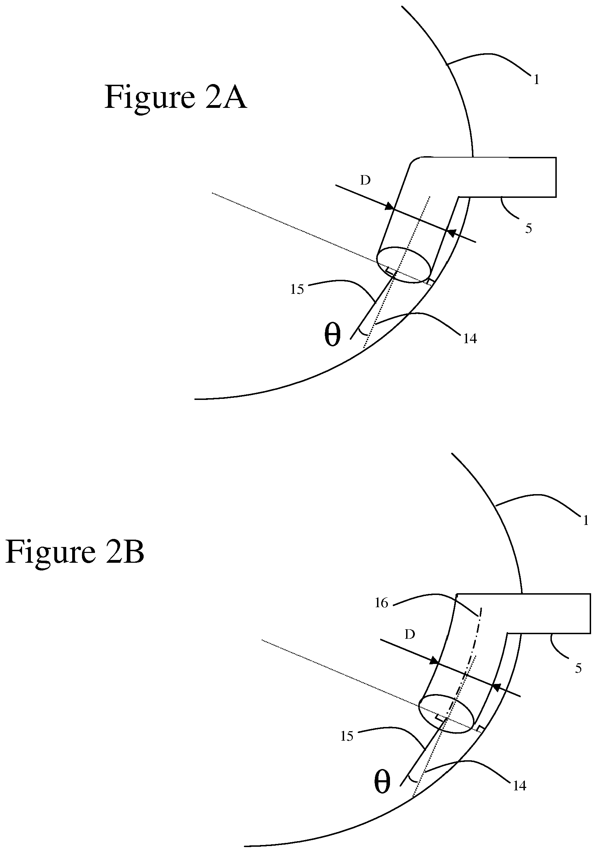

La figure 2 représente une vue du réacteur de la figure 1 selon la coupe AA'. La forme et, éventuellement, les dimensions, du tuyau formant la canne 5 sont choisies de manière à ce que la direction du jet de fluide à la sortie de la canne soit dirigée selon une direction sensiblement horizontale et sensiblement tangentielle à la paroi de l'enceinte 1. Les figures 2A et 2B représentent deux formes de canne 5 mises en forme selon l'invention. Par exemple, en référence à la figure 2A, l'extrémité de la canne est en forme de tube, par exemple un tube droit c'est-à-dire qui s'étend selon une direction droite. Par exemple la canne peut être en forme d'un cylindre de section circulaire ou de la forme d'un cône tronqué. Par exemple, l'extrémité de la canne 5 peut être un cylindre de section circulaire de diamètre D. Alternativement, en référence à la figure 2B, la canne 5 peut être en forme de tube dont l'axe est courbe. Par exemple, la canne 5 est un tube de section circulaire de diamètre D constant, l'axe 16 du tube formant un arc de cercle concentrique au cercle décrit par l'enceinte 1 dans un plan horizontal.

La canne 5 est dimensionnée pour diriger le fluide froid dans une direction sensiblement tangentielle à la paroi de l'enceinte 1. En référence aux figures 2A et 2B, l'extrémité de la canne 5 est formée par une portion de tube qui s'étend selon la droite 14. La direction tangentielle à la paroi de l'enceinte 1 au niveau de l'orifice de sortie de la canne 5 est représentée par la droite 15. Par exemple, selon l'invention, la direction du jet du fluide issu de la canne est sensiblement tangentielle à la surface interne de la paroi de l'enceinte 1 au niveau de la sortie, c'est à dire que la direction du jet forme un angle θ compris entre -10° et +10°, de préférence entre -5° et +5°, par rapport à la tangente à la surface interne de l'enceinte 1 au niveau de la sortie de la canne 5, c'est-à-dire par rapport à la droite 15.

De plus, la canne 5 est dimensionnée pour diriger le fluide froid selon une direction sensiblement horizontale. Par exemple, la direction du jet de fluide issu de la canne, c'est-à-dire la direction dans laquelle s'étend le tube formant l'extrémité de la canne au niveau de la sortie peut être sensiblement horizontale. Par exemple la direction du jet forme un angle compris entre -10° et +10, de préférence entre -5° et +5°, par rapport à une direction horizontale.

La canne est positionnée à proximité de la paroi de l'enceinte 1 et à proximité du plateau de collecte 6. Par exemple l'écartement maximum entre la paroi de l'enceinte 1 et la canne est compris entre 0 et 40 cm, de préférence entre 0 et 30 cm. Par exemple, l'écartement maximum entre la surface du plateau de collecte et la canne est compris entre 0 et 10 cm. De préférence, la longueur de la canne 5 dans l'espace de collecte 4 est réduite, par exemple compris entre 5 et 50 cm, de préférence entre 5 et 20 cm. Ainsi, l'orifice situé à l'extrémité de la buse peut déboucher à une distance inférieure à 40 cm, de préférence inférieure à 30 cm de l'enceinte 1. De plus, l'orifice peut déboucher à une distance inférieure à 10 cm du plateau de collecte.

La simplicité de la forme de la canne 5 et les dimensions réduites de la canne 5 par rapport à la taille du réacteur permettent de mettre en oeuvre le système d'injection selon l'invention dans le cadre d'un remodelage, couramment nommé "revamping", d'une installation. En effet, on peut installer la canne 5 en lieu et place d'une canne dans un réacteur existant, par exemple un réacteur décrit par les documents US 7,314,602 ou US 2004/0234434.

En référence à la figure 1, le plateau de collecte 6 communique avec un boite de trempe 7 qui a pour fonction de mélanger le liquide et le gaz collecté sur le plateau 6. La boite 7 peut présenter diverses géométries. En référence à la figure 2, la boite de trempe comporte deux orifices 12 d'entrée communiquant avec l'espace de collecte 4 à travers le plateau 6. Ainsi, les fluides recueillis sur le plateau 6 s'écoulent dans la boite de trempe 7 via les orifices 12. Les fluides gazeux et liquides sont mélangés dans la boite 7 qui peut présenter différentes configurations internes. Par exemple la boite de mélange 7 peut être réalisée selon l'enseignement du document FR 2824495. De plus, la boite de trempe 7 comporte deux orifices 13 de sortie communiquant avec l'espace situé en dessous de la boite 7. Par exemple, les orifices 13 sont situés sur le fond de la boite 7, en quinconce des orifices d'entrée 12.

L'injection horizontale et tangentielle du fluide froid par la canne 5 sur le plateau 6 permet de générer un écoulement rotatif du fluide sur le plateau 6. Du fait de l'emplacement de la canne à proximité de l'enceinte 1 et de la position centrale des orifices 12, l'écoulement rotatif s'effectue selon une spirale depuis l'extérieure vers l'intérieur du plateau 6. Cet écoulement rotatif améliore efficacement le mélange et l'homogénéisation des températures entre les fluides chauds issus du lit 2 et le fluide froid injecté par la canne 5. De préférence, on injecte un fluide comportant au moins 70%, voir 80% en volume de liquide, afin que l'inertie du liquide injecté engendre un meilleur mouvement de rotation du fluide sur le plateau 6. De plus, pour assurer le mouvement de rotation, le fluide froid peut être injecté par la canne 5 à une vitesse comprise de préférence entre 1 et 15 m/s. par exemple, la forme et les dimensions peuvent être adaptée en fonction de la pression à laquelle le fluide froid est disponible pour injecter le fluide à une vitesse comprise entre 1 et 15 ms dans l'espace de collecte 4.

En référence à la figure 1, en dessous de la boite de trempe 7 est disposé un plateau distributeur 9. Le document US 6,093,373 décrit un exemple de réalisation d'un plateau distributeur. Le plateau 9 permet de distribuer les fluides issus de la boite 7 sur le lit de catalyseur 11. Le plateau 9 est muni d'éléments de distribution, par exemple des cheminées, pour distribuer le gaz et le liquide sur toute la surface de la section du réacteur. Eventuellement, on dispose un plateau pré-distributeur 8 entre le plateau 9 et la boite 7 afin de casser les jets de fluides sortant de la boite 7 de manière à ne pas perturber le fonctionnement du plateau distributeur 9. Par exemple le plateau 8 est composé d'une plaque perforée. Pour améliorer l'homogénéité de l'écoulement de fluide dans le lit 2, on peut disposer une couche 10 de grains solides inertes, couramment nommé "grading", au dessus du lit 11.

Les exemples présentés ci-après permettent de comparer les performances d'une injection d'un fluide de trempe dans un réacteur selon l'invention par rapport à l'art antérieur.

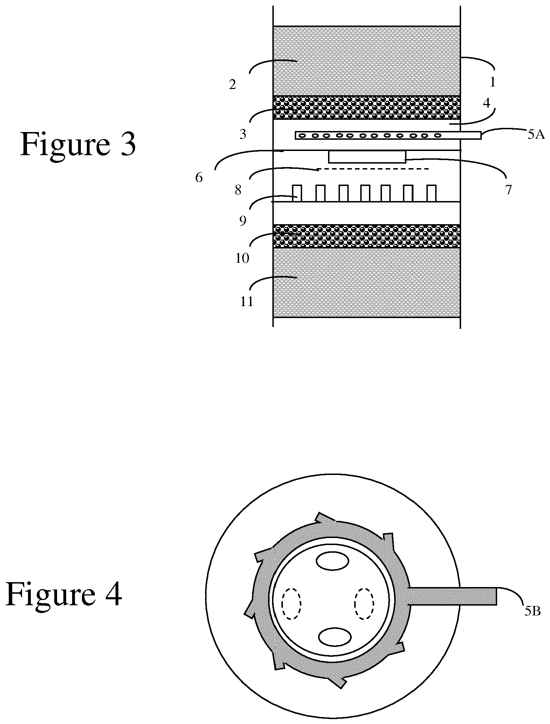

L'efficacité du système selon l'invention proposée est comparée à celle d'un dispositif à canne droite décrit par la figure 3 et à celle d'un dispositif à canne circulaire décrit par la figure 4.

La figure 3 présente un dispositif de trempe à canne droite similaire à celui divulgué dans le document US 7,314,602. Les références de la figure 3 identiques à celles de la figure 1 désignent les mêmes éléments. En référence à la figure 3, la canne d'injection 5A est un tube droit perforé, qui distribue le fluide froid à différents endroits sur le plateau de collecte 6.

La figure 4 présente un dispositif de trempe avec une canne d'injection circulaire 5B, similaire à celui divulgué par le document US 2004/0234434.

Une maquette froide a été utilisée pour comparer les performances de mélange entre trois configurations distinctes de trempe selon la figure 2, selon la figure 3 et selon la figure 4.

La maquette est composée d'un cylindre droit en position verticale, dont la section a 0,48 m de diamètre. La maquette comporte un lit de catalyseur de 1 m de hauteur. L'espace vide 4 où est réalisée la collecte des fluides, au dessus du plateau de collecte 6, a une hauteur de 20 cm.

Le cylindre est alimenté en tête par un mélange d'eau et d'air sous 1 bar à 50°C. Des essais sont réalisés à différentes vitesses superficielles de gaz (Vsg) et de liquide (Vsl) en entrée de lit supérieur.

Le fluide de trempe froid est soit du liquide (de l'eau) soit du gaz (de l'air). Il est injecté avec un débit égal à la moitié du débit de la même phase entrant dans le lit supérieur. Lorsque la vitesse superficielle de liquide (Vsl) entrant dans le lit supérieur est inférieure à 1 cm/s, le fluide de trempe est gazeux. Lorsque la vitesse superficielle de liquide (Vsl) entrant dans le lit supérieur est supérieure à 1 cm/s, le fluide de trempe est liquide. Pour les trois configurations, les tests effectués à 0,002 m/s, 0,005 m/s et 0,008 m/s sont réalisés avec injection d'un gaz (de l'air) et les tests effectués à 0,015 m/s et 0,02 m/s sont réalisés avec injection d'un liquide (de l'eau).

Dans les trois configurations étudiées, on utilise la même boite de trempe, seule la forme de la canne d'injection du fluide de trempe diffère d'une configuration à une autre.

Pour les trois configurations, la boite de trempe est identique à la boite 7 schématisée par les figures 1 et 2. Les orifices 12 et 13 sont circulaires de diamètre 3 cm.

Dans la configuration 1 selon les figures 1 et 2A correspondant à la configuration selon l'invention, la canne d'injection est un tube coudé, de diamètre D égal à 2 cm, collé à la paroi de la colonne et au plateau de collecte. L'extrémité de la canne 5 est un cylindre droit dont l'axe est orienté de manière parfaitement tangentielle à la cloison cylindrique de la maquette.

Dans la configuration 2 selon la figure 3, non conforme à l'invention, la canne 5A est un cylindre droit de 3 cm de diamètre interne, comportant 6 trous de 1 cm de diamètre.

Dans la configuration 3 selon la figure 4, non conforme à l'invention, la canne 5B est circulaire forme un tore de 20 cm de diamètre, et de 3cm de diamètre interne. Le tore est équipé de sept trous de sortie, de 1 cm de diamètre, orientés à 45° par rapport à la direction tangentielle.

Pour chaque configuration testée, six thermocouples sont positionnés en entrée de lit inférieur et dans la couche de "grading". L'écart maximal de température mesuré par ces thermocouples définit l'écart de température résiduel, noté ΔT servant à comparer les configurations.

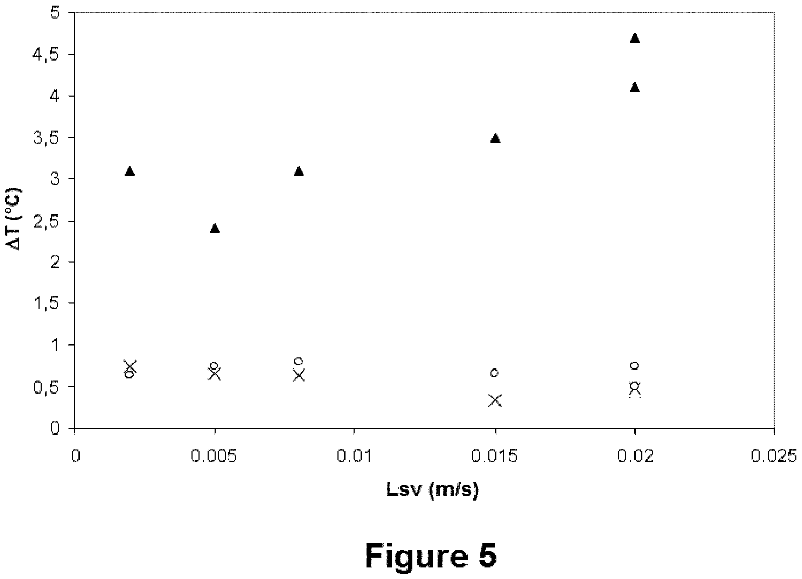

Les résultats sont présentés sur la figure 5 qui donne l'évolution du Vsl en m/s en fonction du ΔT en °C. Les résultats sont reportés en fonction de la vitesse superficielle de liquide Vsl, car ils se sont avérés peu sensibles à la vitesse superficielle de gaz Vsg. Les croix indiquent les résultats pour la configuration 1, les ronds indiquent les résultats pour la configuration 3, les triangles représentent les résultats pour la configuration 2.

On remarque plusieurs points importants sur les résultats donnés par la figure 5 :
- les meilleures performances sont obtenues avec la canne d'injection en tube coudé selon selon l'invention,
- les performances obtenues avec la canne coudée de la configuration 1 sont meilleures avec un fluide de trempe liquide (Vsl>1 cm/s) qu'avec un fluide de trempe gazeux. Ceci est lié à l'inertie du liquide froid, plus importante que celle d'un gaz froid, ce qui permet de mettre en rotation plus facilement le liquide sur le plateau de collecte.
- les performances obtenues avec la canne de forme torique de la configuration 3 sont proches des résultats obtenus avec la canne en tube coudé dans la configuration 1 selon l'invention, avec un fluide de trempe gazeux, et légèrement moins bonnes avec un fluide de trempe liquide.

Par conséquent, la configuration 1 selon l'invention donne de meilleurs résultats que les cannes selon les configurations 2 et 3, tout en étant plus légère, de montage mécanique plus aisé, et moins encombrant. Les bénéfices du dispositif selon l'invention sont donc très importants.

## Revendications

1. Réacteur catalytique comportant une enceinte (1) renfermant au moins deux lits de catalyseur solide (2; 11) séparés par une zone intermédiaire comportant un plateau collecteur (6) coopérant avec une boite de trempe (7) disposée sous le plateau collecteur (6), le réacteur comportant une buse d'injection (5) d'un fluide de trempe, **caractérisé en ce que** la buse d'injection (5) est disposée dans un espace de collecte (4) situé dans la zone intermédiaire au-dessus du plateau collecteur (6) **et à la périphérie du réacteur, en ce que** la buse d'injection (5) consiste en un tuyau **coudé** comportant un unique orifice débouchant dans l'espace de collecte, l'orifice étant situé à l'extrémité du tuyau, **en ce que** l'écartement maximum entre l'enceinte (1) et la buse d'injection (5) est compris entre 0 et 40 cm, et **en ce que** l'extrémité de la buse d'injection (5) comprend une portion tubulaire configurée de manière à injecter le fluide de trempe dans l'espace de collecte (4) selon une direction sensiblement horizontale et formant un angle compris entre -10° et +10° par rapport à la direction tangente à la **surface interne de la** paroi de l'enceinte (1) au niveau de **la sortie de** ladite portion tubulaire **de sorte à produire un mouvement rotatif du fluide sur le plateau collecteur (6).**

2. Réacteur selon la revendication 1, **caractérisé en ce que** la buse (5) débouche à la paroi de l'enceinte (1) de manière à injecter un fluide selon une direction formant un angle compris entre -10° et +10° par rapport à la direction horizontale.

3. Réacteur selon l'une des revendications 1 et 2, **caractérisé en ce que** l'extrémité de la buse d'injection (5) est composée d'une portion tubulaire droite formant un angle (θ) compris entre -10° et +10° par rapport à la direction tangente à la paroi de l'enceinte (1) au niveau de l'orifice de la buse.

4. Réacteur selon la revendication 3, **caractérisé en ce que** la portion tubulaire droite forme un angle compris entre -10°et +10° par rapport à la direction horizontale.

5. Réacteur selon l'une des revendications précédentes, **caractérisé en ce que** la buse (5) forme un tube de longueur comprise entre 5 cm et 50 cm, mesurée dans l'espace de collecte (4).

6. Réacteur selon l'une des revendications précédentes, **caractérisé en ce que** la buse (5) est disposée à une distance inférieure à 30 cm de l'enceinte (1) et à une distance inférieure à 20 cm du plateau de collecte (6).

7. Réacteur selon l'une des revendications précédentes, comportant un plateau (9) distributeur de gaz et de liquide, disposé sous la boite de trempe (7).

8. Réacteur selon la revendication 7, comportant une plaque perforée (8) disposée entre la boite de trempe (7) et le plateau distributeur (9).

9. Procédé de mise en oeuvre d'un réacteur selon l'une des revendications 1 à 8, **caractérisé en ce que** l'on injecte par ladite buse (5) un fluide comportant au moins 70% en volume de liquide.

10. Procédé selon la revendication 9, dans lequel on injecte par ladite buse (5) un fluide à une vitesse comprise entre 1 et 15 m/s.

11. Procédé pour obtenir un réacteur selon l'une des revendications 1 à 8, dans lequel on effectue un remodelage d'un réacteur existant en remplaçant l'ancienne buse par une buse d'injection (5) dont l'extrémité comprend une portion tubulaire configurée de manière à injecter le fluide dans l'espace de collecte selon une direction sensiblement horizontale et formant un angle compris entre -10° et +10° par rapport à la direction tangente à la paroi de l'enceinte au niveau de ladite portion tubulaire.

## Patentansprüche

1. Katalytischer Reaktor, umfassend einen Raum (1), der mindestens zwei feste Katalysatorbetten (2; 11) einschließt, die durch eine Zwischenzone getrennt sind, umfassend eine Sammelplatte (6), die mit einer Härtekammer (7) zusammenwirkt, die unter der Sammelplatte (6) angeordnet ist, wobei der Reaktor eine Einspritzdüse (5) eines Härtefluids umfasst, **dadurch gekennzeichnet, dass** die Einspritzdüse (5) in einem Sammelraum (4) angeordnet ist, der sich in der Zwischenzone über der Sammelplatte (6) und an der Peripherie des Reaktors befindet, dass die Einspritzdüse (5) in einem gebogenen Rohr besteht, umfassend eine einzige Öffnung, die in den Sammelraum mündet, wobei sich die Öffnung am Ende des Rohrs befindet, dass der maximale Abstand zwischen dem Raum (1) und der Einspritzdüse (5) zwischen 0 und 40 cm beträgt, und dass das Ende der Einspritzdüse (5) einen röhrenförmigen Abschnitt umfasst, der derart ausgeführt ist, dass das Härtefluid in den Sammelraum (4) in einer im Wesentlichen horizontalen Richtung eingespritzt wird, wobei ein Winkel zwischen -10° und +10° in Bezug zur Tangentialrichtung an die Innenfläche der Wand des Raums (1) im Bereich des Ausgangs des röhrenförmigen Abschnitts gebildet wird, um eine Drehbewegung des Fluids auf der Sammelplatte (6) zu erzeugen.

2. Reaktor nach Anspruch 1, **dadurch gekennzeichnet, dass** die Düse (5) an der Wand des Raums (1) mündet, um ein Fluid in eine Richtung einzuspritzen, die einen Winkel zwischen - 10° und +10° in Bezug zur Horizontalrichtung bildet.

3. Reaktor nach einem der Ansprüche 1 und 2, **dadurch gekennzeichnet, dass** die Einspritzdüse (5) aus einem geraden röhrenförmigen Abschnitt besteht, der einen Winkel (θ) zwischen -10° und +10° in Bezug zur Tangentialrichtung an die Wand des Raums (1) im Bereich der Öffnung der Düse bildet.

4. Reaktor nach Anspruch 3, **dadurch gekennzeichnet, dass** der gerade röhrenförmige Abschnitt einen Winkel zwischen -10° und +10° in Bezug zur Horizontalrichtung bildet.

5. Reaktor nach einem der vorhergehenden Ansprüche, **dadurch gekennzeichnet, dass** die Düse (5) ein Rohr mit einer Länge zwischen 5 cm und 50 cm, gemessen im Sammelraum (4), bildet.

6. Reaktor nach einem der vorhergehenden Ansprüche, **dadurch gekennzeichnet, dass** die Düse (5) in einem Abstand unter 30 cm zum Raum (1) und in einem Abstand unter 20 cm zur Sammelplatte (6) angeordnet ist.

7. Reaktor nach einem der vorhergehenden Ansprüche, umfassend eine Platte (9) zur Verteilung von Gas und Flüssigkeit, die unter der Härtekammer (7) angeordnet ist.

8. Reaktor nach Anspruch 7, umfassend eine perforierte Platte (8), die zwischen der Härtekammer (7) und der Verteilungsplatte (9) angeordnet ist.

9. Verfahren für den Einsatz eines Reaktors nach einem der Ansprüche 1 bis 8, **dadurch gekennzeichnet, dass** durch die Düse (5) ein Fluid, umfassend mindestens 70 % Volumen Flüssigkeit, eingespritzt wird.

10. Verfahren nach Anspruch 9, bei dem durch die Düse (5) ein Fluid mit einer Geschwindigkeit zwischen 1 und 15 m/s eingespritzt wird.

11. Verfahren, um einen Reaktor nach einem der Ansprüche 1 bis 8 zu erhalten, bei dem eine Neumodellierung eines bestehenden Reaktors erfolgt, wobei die alte Düse durch eine Einspritzdüse (5) ersetzt wird, deren Ende einen röhrenförmigen Abschnitt umfasst, der derart ausgeführt ist, dass das Fluid in den Sammelraum in einer im Wesentlichen horizontalen Richtung eingespritzt wird, wobei ein Winkel zwischen -10° und +10° in Bezug zur Tangentialrichtung an die Wand des Raums im Bereich des röhrenförmigen Abschnitts gebildet wird.

## Claims

1. A catalytic reactor comprising an enclosure (1) comprising at least two beds of solid catalyst (2; 11) separated by an intermediate zone comprising a collector plate (6) cooperating with a quench box (7) disposed below the collector plate (6), the reactor comprising a nozzle (5) for injecting a quench fluid, **characterized in that** the nozzle (5) is disposed in a collecting region (4) located in the intermediate zone above the collector plate (6) and at the periphery of the reactor, **in that** the injection nozzle (5) consists of a bent tube comprising a single orifice discharging into the collecting region, the orifice being located at the end of the tube, **in that** the maximum distance between the enclosure (1) and the injection nozzle (5) is in the range 0 to 40 cm, and **in that** the end of the injection nozzle (5) comprises a tubular portion configured so as to inject the quench fluid into the collecting region (4) in a substantially horizontal direction and forming an angle in the range -10° to +10° with respect to the direction tangential to the inner surface of the wall of the enclosure (1) at the level of the outlet of the tubular portion so as to generate a rotational flow over the collector plate (6).

2. A reactor according to claim 1, **characterized in that** the nozzle (5) discharges at the wall of the enclosure (1) so as to inject a fluid in a direction forming an angle in the range -10° to +10° with respect to the horizontal direction.

3. A reactor according to claim 1 or claim 2, **characterized in that** the end of the injection nozzle (5) is composed of a straight tubular portion forming an angle (θ) in the range - 10° to +10° with respect to the direction tangential to the wall of the enclosure (1) at the level of the nozzle orifice.

4. A reactor according to claim 3, **characterized in that** the straight tubular portion forms an angle in the range -10° to +10° with respect to the horizontal direction.

5. A reactor according to one of the preceding claims, **characterized in that** the nozzle (5) forms a tube with a length in the range 5 cm to 50 cm, measured in the collecting region (4).

6. A reactor according to one of the preceding claims, **characterized in that** the nozzle (5) is disposed at a distance of less than 30 cm from the enclosure and at a distance of less than 20 cm from the collector plate (6).

7. A reactor according to one of the preceding claims, comprising a distributor plate (9) for gas and liquid disposed beneath the quench box (7).

8. A reactor according to claim 7, comprising a perforated plate (8) disposed between the quench box (7) and the distributor plate (9).

9. A method for deploying a reactor according to one of claims 1 to 8, **characterized in that** a fluid comprising at least 70% by volume of liquid is injected via said nozzle (5).

10. A method according to claim 9, in which a fluid is injected via said nozzle (5) at a rate in the range 1 to 15 m/s.

11. A method of obtaining a reactor according to one of claims 1 to 8, in which an existing reactor is revamped by replacing the old nozzle with an injection nozzle (5) the end of which comprises a tubular portion configured so as to inject the fluid into the collecting region in a substantially horizontal direction and forming an angle in the range -10° to +10° with respect to the direction tangential to the wall of the enclosure at said tubular portion.
